Europäisches Patentamt

European Patent Office

Office européen des brevets

(19)

(11) **EP 0 898 533 B1**

(12) **EUROPÄISCHE PATENTSCHRIFT**

(45) Veröffentlichungstag und Bekanntmachung des Hinweises auf die Patenterteilung:
**26.07.2000 Patentblatt 2000/30**

(21) Anmeldenummer: **97923953.0**

(22) Anmeldetag: **21.05.1997**

(51) Int Cl.⁷: **B60T 13/72**

(86) Internationale Anmeldenummer:
**PCT/EP97/02578**

(87) Internationale Veröffentlichungsnummer:
**WO 97/44229 (27.11.1997 Gazette 1997/51)**

(54) **ELEKTRONISCH STEUERBARE BREMSANLAGE**

ELECTRONICALLY CONTROLLED BRAKING SYSTEM

SYSTEME DE FREINAGE A COMMANDE ELECTRONIQUE

(84) Benannte Vertragsstaaten:
**DE FR GB**

(30) Priorität: **22.05.1996 DE 19620540**

(43) Veröffentlichungstag der Anmeldung:
**03.03.1999 Patentblatt 1999/09**

(73) Patentinhaber: **Lucas Industries Limited London W1Y 4DJ (GB)**

(72) Erfinder: **DIERINGER, Werner D-56179 Vallendar (DE)**

(74) Vertreter: **Schmidt, Steffen J., Dipl.-Ing. et al Wuesthoff & Wuesthoff, Patent- und Rechtsanwälte, Schweigerstrasse 2 81541 München (DE)**

(56) Entgegenhaltungen:
**EP-A- 0 706 924          WO-A-96/06763
WO-A-96/31374          WO-A-96/34783
DE-A- 3 943 002          DE-A- 19 514 591**

**Beschreibung**

Die Erfindung betrifft eine elektronisch steuerbare Bremsanlage für Kraftfahrzeuge mit einer Bremsdruckgebereinheit, die einen Hauptbremszylinder aufweist, um einen Bremsdruck zu erzeugen, einem Bremspedal, über das eine Betätigungskraft in die Bremsdruckgebereinheit einleitbar ist, um die Bremsdruckgebereinheit zu betätigen, einem elektronisch steuerbaren Bremskraftverstärker, um entweder die zur Betätigung der Bremsdruckgebereinheit über das Bremspedal eingeleitete Betätigungskraft zu verstärken oder eine Betätigung der Bremsdruckgebereinheit zu bewirken, sowie Sensoren, die den von der Bremsdruckgebereinheit erzeugten Bremsdruck und eine mit der Verstärkung des elektronisch steuerbaren Bremskraftverstärkers in Beziehung stehende Grösse für eine elektronische Steuereinheit erfassen.

Aus der DE 40 28 290 C1 ist ein Verfahren zur Verkürzung des Bremsweges in kritischen Fahrsituationen bekannt, bei dem die durch den Fahrer veranlasste Betätigungsgeschwindigkeit des Bremspedals in dessen jeweiliger Stellung als einziges Kriterium zur Auslösung eines automatischen Bremsvorgangs herangezogen wird. Bei der dort beschriebenen elektronisch steuerbaren Bremsanlage wird ein Vergleich der durch den Fahrer veranlassten Betätigungsgeschwindigkeit des Bremspedals in dessen jeweiliger Stellung mit einem unveränderlichen Schwellwert ausgeführt und in Abhängigkeit von dem Vergleichergebnis die Notbremsung veranlasst oder nicht.

Nachteilig bei dem in der DE 40 28 290 C1 beschriebenen Verfahren ist, dass einzig die durch den Fahrer veranlasste Betätigungsgeschwindigkeit des Bremspedals als Auslösekriterium für einen automatischen Bremsvorgang herangezogen wird. Die Betätigungsgeschwindigkeit des Bremspedals ergibt sich durch zeitliche Ableitung des Betätigungsweges des Bremspedals. Da der Betätigungsweg des Bremspedals bedingt durch Spiel in dem Betätigungsmechanismus einen nicht unerheblichen Leerweg aufweist, ist die Heranziehung der Betätigungsgeschwindigkeit des Bremspedals als einziges Auslösekriterium für einen automatischen Bremsvorgang verbesserungswürdig. Beispielsweise könnte durch den Leerweg bedingt ein unbeabsichtigtes Antippen des Bremspedals genügen, um einen automatischen Bremsvorgang auszulösen, was in diesem Fall aber zu einer gefährlichen Fahrsituation führen könnte.

Aus der DE 41 02 496 A1 ist eine Bremsdruck-Steuereinrichtung bekannt, bei der der im hydraulischen Bremskreis erzeugte Bremsdruck als mit der auf das Bremspedal ausgeübten Betätigungskraft in Beziehung stehende Grösse gemessen wird, um bei Überschreiten eines Schwellenwertes den Bremskreis zu sperren, in dem der erhöhte Bremsdruck gemessen wurde.

Weiterhin wird in der DE 44 36 297 A1 ein elektronisch gesteuerter Bremskraftverstärker vorgeschlagen, bei dem ein als Drucksensor ausgestalteter Sensor zumindest den in der Arbeitskammer des Bremskraftverstärkers herrschenden Druck erfasst.

Die in der DE 41 02 496 A1 und in der DE 44 36 297 A1 beschriebenen Bremsanlagen ziehen als Auslösekriterium für einen automatischen Bremsvorgang indirekt die auf das Bremspedal ausgeübte Betätigungskraft heran, die gemäss der DE 41 02 496 A1 über den im hydraulischen Bremskreis erzeugten Bremsdruck und gemäss der DE 44 36 297 A1 über den an der beweglichen Wand des Bremskraftverstärkers wirkenden Differenzdruck bestimmt wird. Zwar ist die auf das Bremspedal ausgeübte Betätigungskraft gegenüber dem Betätigungsweg ein zuverlässigereres und somit sichereres Auslösekriterium für einen automatischen Bremsvorgang, allerdings besteht der grosse Nachteil, dass die Betätigungskraft während des automatischen Bremsvorganges nicht bestimmbar ist.

Bei automatischen Bremsvorgängen ist zu unterscheiden zwischen solchen, die unabhängig von einer Betätigung des Bremspedals erfolgen, um zum Beispiel eine Fahrdynamikregelung oder eine Antriebsschlupfregelung auszuführen und solchen, die eine Betätigung des Bremspedals verstärken, um zum Beispiel eine Not- bzw. Zielbremsung auszuführen. Für die Sicherheit ist es von entscheidender Bedeutung, dass auch während des automatischen Bremsvorganges die Betätigungskraft auswertbar ist. Als Beispiel sei eine Fahrdynamikregelung erwähnt, bei der ein automatischer Bremsvorgang unabhängig von einer Betätigung des Bremspedals erfolgt, um die Stabilität des Kraftfahrzeuges insbesondere beim Fahren in einer Kurve zu verbessern. Erfolgt während der Fahrdynamikregelung eine Betätigung des Bremspedals, so ist der Fahrerwunsch zu bewerten, um zu entscheiden, ob die Fahrdynamikregelung fortzusetzen ist, oder ob die Fahrdynamikregelung abzubrechen und eine Not- bzw. Zielbremsung durchzuführen ist. Zur Bewertung des Fahrerwunsches ist die Betätigungskraft ein sehr zuverlässiges und sicheres Kriterium.

Demnach erscheint es auf den ersten Blick naheliegend, einen Kraftsensor einzusetzen, um die Betätigungskraft am Bremspedal ständig, also auch während eines automatischen Bremsvorganges, zu erfassen. Allerdings besteht der entscheidende Nachteil, dass ein für diesen Einsatzzweck geeigneter Kraftsensor auf dem Markt schwierig nur mit einem erheblichen Kostenaufwand zu beschaffen ist. Nachteilig ist auch, dass ein derartiger Kraftsensor in das Bremspedal bzw. in den Betätigungsmechanismus zu integrieren ist, was einen hohen technischen Aufwand bedeutet.

Von daher liegt der Erfindung die Aufgabe zugrunde eine elektronisch steuerbare Bremsanlage der eingangs genannten Art in Bezug auf die vorgenannten Nachteile zu verbessern, um einem sehr hohen Sicherheitsstandard bei einem verhältnissmässig geringen Kostenaufwand gerecht zu werden.

Die Lösung der Aufgabe erfolgt dadurch, dass die elektronische Steuereinheit die über das Bremspedal eingeleitete Betätigungskraft aus dem von der Bremsdruckgebereinheit erzeugten Bremsdruck und der mit der Verstärkung des elektronisch steuerbaren Bremskraftverstärkers in Beziehung stehenden Grösse ermittelt. Damit ergibt sich der Vorteil, dass die über das Bremspedal eingeleitete Betätigungskraft zuverlässig und sicher ermittelbar ist, ohne dass der Einsatz eines Kraftsensors erforderlich ist.

Dadurch, dass der elektronisch steuerbare Bremskraftverstärker (21) mindestens eine bewegliche Wand (22) aufweisen kann, die mit einem Differenzdruck ($dp_{47}$) beaufschlagbar ist, besteht der Vorteil, dass die mit der Verstärkung des elektronisch steuerbaren Bremskraftverstärkers (21) in Beziehung stehende Grösse ($dp_{47}$) der an der beweglichen Wand beaufschlagte Differenzdruck ($dp_{47}$) sein kann.

Dadurch, dass die elektronische Steuereinheit die über das Bremspedal eingeleitete Betätigungskraft unter Einbeziehung der Arbeitsfläche des Hauptbremszylinders und der Arbeitsfläche der beweglichen Wand ermittelt, erweist es sich als besonders vorteilhaft die über das Bremspedal eingeleitete Betätigungskraft gemäss einer einfachen Formel zu ermitteln, da die Arbeitsfläche des Hauptbremszylinders, auf die der in dem Hauptbremszylinder erzeugte Bremsdruck wirkt, und die Arbeitsfläche der beweglichen Wand, die mit dem Differenzdruck beaufschlagt wird, bekannte sich in der Regel nicht ändernde Systemparameter sind. Dadurch ist die von der Bremsdruckgebereinheit insgesamt bereitgestellte Bremskraft aus der Arbeitsfläche des Hauptbremszylinders und dem in dem Hauptbremszylinder erzeugten Bremsdruck ermittelbar. Auch ist die von dem elektronisch steuerbaren Bremskraftverstärker erzeugte Bremskraftanteil aus der Arbeitsfläche der beweglichen Wand und dem an der beweglichen Wand beaufschlagten Differenzdruck ermittelbar. Die über das Bremspedal eingeleitete Betätigungskraft ergibt sich somit durch Subtraktion des von dem elektronisch steuerbaren Bremskraftverstärker erzeugten Bremskraftanteils von der von der Bremsdruckgebereinheit insgesamt bereitgestellten Bremskraft.

Dadurch, dass die elektronische Steuereinheit bei der Ermittlung der über das Bremspedal eingeleiteten Betätigungskraft mindestens einen Korrekturwert und/oder mindestens einen Korrekturfaktor einbeziehen kann, ergibt sich der Vorteil, dass auf einfache Weise auch durch Reib-, Massenträgheits- sowie Spannkräfte hervorgerufene Störeinflusse kompensierbar sind, wodurch eine höhere Genauigkeit bei der Ermittlung der über das Bremspedal eingeleiteten Betätigungskraft resultiert.

Dadurch, dass die elektronische Steuereinheit die über das Bremspedal eingeleitete Betätigungskraft fortlaufend ermittelt, besteht der Vorteil, dass die über das Bremspedal eingeleitete Betätigungskraft nicht nur als Auslösekriterium für einen automatischen Bremsvorgang, beispielsweise eine Not-bzw. Zielbremsung, heranziehbar ist, sondern vor allem während eines automatischen Bremsvorganges, beispielsweise einer Fahrdynamikregelung, eine Erkennung des Fahrerwunsches sicherstellt.

Dadurch, dass die elektronische Steuereinheit die über das Bremspedal eingeleitete Betätigungskraft bewertet, um zu entscheiden, ob eine Fahrdynamikregelung fortzusetzen ist, oder ob die Fahrdynamikregelung abzubrechen und eine Not- bzw. Zielbremsung durchzuführen ist, wird ein sehr hohes Sicherheitsmass erreicht.

Die Erfindung und weitere Vorteile werden im folgenden anhand einer Zeichnung näher erläutert. Dazu zeigt

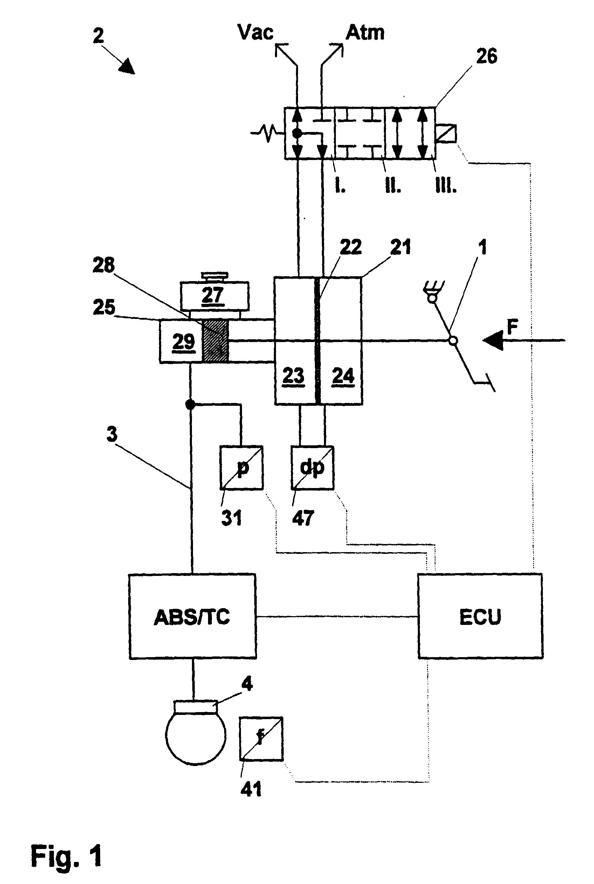

Fig. 1 schematisch eine erfindungsgemässe Ausführungsform einer elektronisch steuerbaren Bremsanlage für Kraftfahrzeuge.

Bei der Bremsanlage nach Fig. 1 dient ein Bremspedal 1 dazu eine Bremsdruckgebereinheit 2 zu betätigen. Die Bremsdruckgebereinheit 2 weist einen Hauptbremszylinder 25 auf, in dem ein Kolben 28 eine Druckkammer 29 bildet. Die Druckkammer 29 wird von einem Reservoir 27 mit Bremsfluid gespeist. Von der Druckkammer 29 führt eine Bremsleitung 3 zu einer Radbremse 4 des Kraftfahrzeugs.

In der Bremsleitung 3 ist eine Antiblockier- und/oder Antriebsschlupfregeleinrichtung ABS/TC zwischen der Bremsdruckgebereinheit 2 und der Radbremse 4 angeordnet. Die Antiblokkier- und/oder Antriebsschlupfregeleinrichtung ABS/TC umfasst in bekannter Weise unter anderem Ventil- und Pumpenanordnungen, die von einer elektronischen Steuereinheit ECU angesteuert werden, um den Druck in der Radbremse 4 zu modulieren. Dies geschieht in Abhängigkeit des Drehverhaltens eines der Radbremse 4 zugeordneten Fahrzeugrades, das mittels eines Sensors 41 erfasst und der elektronischen Steuereinheit ECU zugeführt wird.

Die Bremsdruckgebereinheit 2 weist zur Verstärkung der vom Fahrer über das Bremspedal 1 eingeleiteten Betätigungskraft F einen Bremskraftverstärker 21 auf. Eine bewegliche Wand 22 unterteilt den Bremskraftverstärker 21 in eine Unterdruckkammer 23 und eine Druckkammer 24. Zur Erzeugung des Unterdrucks ist die Unterdruckkammer 23 an eine nicht näher dargestellte Unterdruckquelle Vac angeschlossen. Bei einem mit einem Ottomotor ausgerüsteten Kraftfahrzeug steht das im Ansaugrohr prinzipbedingt erzeugte Vakuum als Unterdruckquelle Vac zur Verfügung. Dagegen ist bei einem durch einen Diesel- oder Elektromotor angetriebenem Kraftfahrzeug eine zusätzliche Vakuumpumpe als Unterdruckquelle Vac erforderlich. Bei einer Betätigung des Bremspedals 1 funktioniert der Bremskraftverstärker 21 in bekannter Weise dadurch, dass die Druckkammer 24 mit Atmosphäre Atm beaufschlagt wird, so dass an der beweglichen Wand ein Differenzdruck $dp_{47}$ wirkt, die die am Bremspedal 1 eingeleitete Betätigungskraft F verstärkt. Im unbetätigtem Zustand sind die Unterdruckkammer 23 und die Druckkammern 24 miteinander verbunden und somit druckausgeglichen, so dass an der beweglichen Wand 22 kein Differenzdruck $dp_{47}$ wirksam ist.

Der Bremskraftverstärker 21 ist über eine elektromagnetisch betätigte Steuerventilanordnung 26 auch elektrisch steuerbar. Dazu ist die hier idealisiert als Drei-Vier-Wege Ventil dargestellte Steuerventilanordnung 26 in unterschiedliche Steuerstellungen I.,II. und III. bringbar:

- in eine erste sogenannte Grund- bzw. Abbaustellung I., in der die Unterdruckkammer 23, die Druckkammer 24 und die Vacuumquelle Vac untereinander verbunden sind, wobei die Verbindung zur Atmosphäre Atm gesperrt ist, so dass über einen Druckausgleichsvorgang ein an der beweglichen Wand 22 wirkender Differenzdruck $dp_{47}$ abgebaut bzw. verringert wird, oder

- in eine zweite sogenannte Haltestellung II., in der die Verbindungen zur Unterdruckkammer 23, Druckkammer 24, Vacuumquelle Vac und Atmosphäre Atm jeweils gesperrt sind, so das ein an der beweglichen Wand anstehender Differenzdruck $dp_{47}$ aufrechterhalten wird, oder

- in eine dritte sogenannte Aufbaustellung III., in der die Unterdruckkammer 23 nur mit der Vacuumquelle Vac und die Druckkammer 24 nur mit der Atmosphäre Atm verbunden ist, so dass ein an der beweglichen Wand 22 anstehender Differenzdruck $dp_{47}$ aufgebaut bzw. erhöht wird.

Die elektrische Steuerbarkeit des Bremskraftverstärkers 21 ermöglicht es Bremsvorgänge auch automatisch, also unabhängig von einer Betätigung des Bremspedals 1 auszuführen. Dies dient beispielsweise zur Ausführung einer Not- bzw. Zielbremsung sowie Bremsungen zur Antriebsschlupfregelung oder Fahrdynamikregelung oder Abstandsregelung.

Dazu erfasst die elektrische Steuereinheit ECU für Betriebszustände der Bremsanlage charakteristische Grössen und wertet diese aus, um in deren Abhängigkeit die elektrische Ansteuerung der Steuerventilanordnung 26 mittels den Steuerstellungen I., II. und III. entsprechenden Strom-, Spannungs- oder Pulsweitenmodulationssignalen vorzunehmen.

Zur Erfassung von Betriebszuständen der Bremsanlage ist ein Sensormittel 47 vorgesehen, das der an der beweglichen Wand 22 wirkende Differenzdruck $dp_{47}$, die aus dem in der Unterdruckkammer 23 herrschenden Druck $p_{23}$ und dem in der Druckkammer 24 herrschenden Druck $p_{24}$ resultiert, erfasst. Dazu ist das Sensormittel 47 beispielsweise an oder in der beweglichen Wand 22 angeordnet. Da eine solche Messung des Differenzdrucks $dp_{47}$ unabhängig von Umgebungsdruckschwankungen ist, vereinfacht sich die Auswertung des Messsignals. Alternativ besteht aber auch die Möglichkeit zwei Drucksensoren an oder in einer ortsfesten Wand des Bremskraftverstärkers 21 einzusetzen, die den Druck $p_{23}$ in der Unterdruckkammer 23 und den Druck $p_{24}$ in der Druckkammer 24 separat erfassen. In diesem Fall werden zwei Messsignale an die elektronische Steuereinheit ECU geleitet und dort der zur weiteren Auswertung benötigte Differenzdruck $dp_{47}$ gemäss der einfachen Beziehung

$$dp_{47} = p_{24} - p_{23}$$

ermittelt.

Für die Auswertung von Betriebszuständen der Bremsanlage besonders charakteristisch ist der am Bremspedal 1 eingeleitete Fahrerwunsch. Zur Erkennung des Fahrerwunsches wird üblicherweise eine Sensoreinrichtung vorgesehen, die den Betätigungsweg des Bremspedals 1 erfasst und an die elektronische Steuereinheit ECU weiterleitet. Aus dem Betätigungsweg kann dann die Betätigungsgeschwindigkeit des Bremspedals 1 abgeleitet werden, die als Kriterium zur Einleitung einer Not- bzw. Zielbremsung dient. Eine Sensoreinrichtung zur Erfassung des Betätigungsweges des Bremspedals 1 ist bei der in Fig. 1 betrachteten Bremsanlage jedoch nicht notwendigerweise erforderlich, da bei Betätigung des Bremspedals 1 eine Verschiebung der beweglichen Wand 22 in axialer Richtung erfolgt, was zu einer Änderung des an der beweglichen Wand 22 wirkenden Differenzdrucks $dp_{47}$ führt. Dadurch ist der am Bremspedals 1 eingeleitete Fahrerwunsch auf einfache Weise aus dem Differenzdruck $dp_{47}$ ableitbar. Allerdings ist es nach Eintritt in die Not- bzw. Zielbremsung, also bei elektrischer Ansteuerung der Steuerventilanordnung 26, nicht mehr möglich, quantitativ auf den Fahrerwunsch zurückzuschliessen.

Eine zur Erkennung des Fahrerwunsches anstelle des Betätigungsweges des Bremspedals 1 zuverlässigere Grösse ist die vom Fahrer über das Bremspedal 1 eingeleitete Betätigungskraft F, da der Betätigungsweg des Bremspedals 1 bedingt durch mechanisches Spiel in dem Betätigungsmechanismus einen nicht unerheblichen Leerweg aufweist. So könnte durch diesen Leerweg bedingt bereits ein unabsichtigtes Antippen des Bremspedals 1 ausreichend sein, um die elektronische Steuereinheit ECU zur Einleitung einer Not- bzw. Zielbremsung zu veranlassen, was in diesem Fall zu einer kritischen Fahrsituation führen könnte.

Den Fahrerwunsch als die tatsächlich über das Bremspedal 1 eingeleitete Betätigungskraft F zu erfassen hat den weiteren Vorteil, dass in der elektronischen Steuereinheit ECU ein zuverlässiges Mass für den vom Fahrer zur Fahrzeugverzögerung gewünschten bzw. aufgebrachten Bremskraftanteil auswertbar ist. Dies ist insbesondere für die Auswertung von sogenannten Mischbremsungen bedeutsam, bei denen die Bremsdruckgebereinheit 2 durch den Fahrer mechanisch betätigt und gleichzeitig über die Steuerventilanordnung 26 elektrisch betätigt wird.

Eine direkte Erfassung der vom Fahrer über das Bremspedal 1 eingeleiteten Betätigungskraft F erfordert eigens einen Kraftsensor, der an oder in dem Bremspedal 1 angeordnet ist.

Bei einem für diesen Einsatzzweck geeigneten Kraftsensor ergibt sich jedoch neben Problemen bei der Beschaffung ein erheblicher Kostenaufwand.

Weiterhin ist ein Sensormittel 31 vorgesehen, das den in der Druckkammer 29 erzeugten und in die Bremsleitung 3 eingeleiteten Bremsdruck $p_{31}$ erfasst und an die elektronische Steuereinheit ECU weiterleitet. Der Bremsdruck $p_{31}$ bzw. dessen zeitlicher Verlauf stellt ein Mass für die von der Bremsdruckgebereinheit 2 zur Fahrzeugverzögerung insgesamt bereitgestellte Bremskraft dar.

Dabei ergibt sich die von der Bremsdruckgebereinheit 2 insgesamt bereitgestellte Bremskraft aus dem vom Fahrer als Betätigungskraft F eingeleiteten Bremskraftanteil und dem von dem elektronisch steuerbaren Bremskraftverstärker 21 additiv erzeugten Bremskraftanteil. Da der Bremsdruck $p_{31}$ unmittelbar in der Druckkammer 29 auf die Arbeitsfläche $A_{28}$ des Hauptbremszylinders 25 bzw. des Kolbens 28 wirkt und der Differenzdruck $dp_{47}$ unmittelbar auf die Arbeitsfläche $A_{22}$ der beweglichen Wand 22 wirkt, lässt sich folgende Kräftebilanz aufstellen:

$$p_{31} * A_{28} = F + dp_{47} * A_{22}$$

Da es sich bei der Arbeitsfläche $A_{28}$ des Hauptbremszylinders 25 bzw. des Kolbens 28 sowie bei der Arbeitsfläche $A_{22}$ der beweglichen Wand 22 jeweils um bekannte sich in der Regel nicht ändernde Systemparameter handelt und der Bremsdruck $p_{31}$ sowie der Differenzdruck $dp_{47}$ fortlaufend messtechnisch erfasst werden, ist die vom Fahrer über das Bremspedal 1 eingeleitete Betätigungskraft F durch die elektronischen Steuereinheit ECU gemäss der Formel

$$F = p_{31} * A_{28} - dp_{47} * A_{22} \qquad (G1)$$

zuverlässig fortlaufend ermittelbar, ohne dass der Einsatz eines Kraftsensors erforderlich ist.

Die vom Fahrer über das Bremspedal 1 eingeleitete Betätigungskraft F ergibt sich somit durch Subtraktion des von dem elektronisch steuerbaren Bremskraftverstärker 21 additiv erzeugten Bremskraftanteil ($dp_{47} * A_{22}$) von der von der Bremsdruckgebereinheit 2 insgesamt bereitgestellten Bremskraft ($p_{31} * A_{28}$).

Die Genauigkeit der auf diese Weise ermittelten Betätigungskraft F lässt sich unter Berücksichtigung der Einflüsse von unter anderem Reib-, Massenträgheits- sowie Spannkräften weiterhin erhöhen. Dies kann unter Einbeziehung eines additiven Korrekturwertes $K_A$ und/oder eines multiplikativen Korrekturfaktors $K_M$ geschehen, so dass sich die Formel zur Ermittlung der Betätigungskraft F zu

$$F = (p_{31} * A_{28} - dp_{47} * A_{22} \pm K_A) * K_M \qquad (G2)$$

ergibt.

Die elektronische Steuereinheit ECU ist in bekannter Weise mit einem Mikrocomputer ausgestattet, auf dem die Formeln (G1, G2) zur Ermittlung der Betätigungskraft F mit einem geringem Aufwand programmierbar sind, so dass eine fortlaufende Berechnung der Betätigungskraft F erfolgen kann. Vor allem bei Verwendung der Formel (G2) kann auf einfache Weise eine dynamische Variation des Korrekturwertes $K_A$ bzw. des Korrekturfaktors $K_M$ in Abhängigkeit vom Betriebszustand der Bremsdruckgebereinheit 2 vorgenommen werden, wodurch eine weitere Erhöhung der Genauigkeit resultiert.

Durch die fortlaufende Ermittlung der Betätigungskraft F wird insbesondere zur Erhöhung der Sicherheit beigetragen, wie nachfolgend erläutert ist.

Da Betriebszustände der Bremsanlage mittels des erzeugten Bremsdruckes $p_{31}$ und des an der beweglichen Wand 22 wirkenden Differenzdrucks $dp_{47}$ ausgewertet werden, besteht die Möglichkeit auf einfache Weise auch die erfassenden Sensormittel 31, 47 zu überwachen. Dazu kann der zwischen dem Differenzdruck $dp_{47}$, der mit der Verschiebung der beweglichen Wand 22 in axialer Richtung in Beziehung steht, und dem Bremsdruck $p_{31}$ bestehende Zusammenhang ausgenutzt werden. Da die Sensormittel 31, 47 an räumlich separaten Messorten erfassen und die Messgrössen $p_{31}$, $dp_{47}$ auf voneinander getrennten Signalwegen an die elektronische Steuereinheit ECU übertragen, ist eine hohe Redundanz gewährleistet.

Wenn der Bremskraftverstärker 21 nicht elektronisch angesteuert ist, ist die vom Fahrer über das Bremspedal 1 eingeleitete Betätigungskraft F aufgrund des bekannten Übersetzungsverhältnisses des Bremskraftverstärkers 21 sowohl aus dem Bremsdruck $p_{31}$ als auch aus dem an der beweglichen Wand 22 wirkenden Differenzdruck $dp_{47}$ bestimmbar. Dadurch ist die Betätigungskraft F auch bei einem Ausfall eines der Sensormittel 31, 47 bzw. bei einem Fehler einer der Messgrössen $p_{31}$, $dp_{47}$ bestimmbar, um eine Not- bzw. Zielbremsung einzuleiten. Allerdings ist in einem solchen Fall nach Eintritt in die Not-bzw. Zielbremsung eine Bestimmung der Betätigungskraft F nicht mehr möglich. Da aber wie bereits erwähnt eine Überwachung der Sensormittel 31, 47 und damit eine Fehlererkennung sicher durchführbar sind, kann die Not- bzw. Zielbremsung gemäss einem Fehlerprogramm ablaufen, das beispielsweise die für eine Not- bzw. Zielbremsung maximal zulässige Zeitdauer herabsetzt oder die für eine Not- bzw. Zielbremsung normalerweise eingestellte Fahrzeugverzögerung reduziert.

Üblicherweise verfügt eine mit einem elektronisch steuerbaren Bremskraftverstärker 21 ausgestattete Bremsdruckgebereinheit 2 über einen Sicherheitsschalter, der ein logisches Signal erzeugt und an die elektronische Steuereinheit ECU weiterleitet. Beispielsweise nimmt dieses logische Signal den Zustand "B" an, wenn der Fahrer eine Betätigungskraft F über das Bremspedal 1 einleitet, und den Zustand "A", wenn der Fahrer keine Betätigungskraft F einleitet. Detektiert die elektronische Steuereinheit ECU bei dem logischen Signal einen Wechsel vom Zustand "A" nach Zustand "B", so ist daran eine Beendigung der Betätigung des Bremspedals 1 erkennbar, und als Kriterium zur Beendigung einer Not- bzw. Zielbremsung verwertbar. Aufgrund der hohen Bedeutung wird der Sicherheitsschalter üblicherweise redundant ausgeführt. Da bei der hier betrachtete Bremsanlage die Betätigungskraft F des Bremspedals 1 fortlaufend auch während einer Not- bzw. Zielbremsung bestimmt wird, kann die Betätigungskraft F bzw. deren zeitlicher Verlauf als Kriterium zur Beendigung einer Not- bzw. Zielbremsung herangezogen werden. Dies hat den Vorteil, dass die Beendigung einer Not- bzw. Zielbremsung frühzeitiger als mit dem Sicherheitsschalter erkannt werden kann. Ein weiterer Vorteil ist, dass der Sicherheitsschalter einfacher und somit kostengünstiger ausgeführt werden kann, da die Redundanz über die Bestimmung der Betätigungskraft F bzw. deren zeitlichem Verlauf gewährleistet ist.

Wesentlich für die in Fig. 1 betrachtete Bremsanlage ist, dass die am Bremspedal 1 eingeleitete Betätigungskraft F fortlaufend bestimmbar ist, also auch dann, wenn der Bremskraftverstärker 21 elektronisch angesteuert ist. Dies ist für die Auswertung von sogenannten Mischbremsungen von besonderer Bedeutung. Als Beispiel hierzu sei eine Fahrdynamikregelung erwähnt, bei der die Stabilität des Kraftfahrzeuges insbesondere beim Fahren in einer Kurve durch eine automatischen Bremsvorgang verbessert wird. Der automatische Bremsvorgang wird durch elektrische Ansteuerung des Bremskraftverstärkers 21 eingeleitet, also unabhängig von einer Betätigung des Bremspedals 1. Erfolgt nach Eintritt in den automatischen Bremsvorgang, also während der Fahrdynamikregelung, eine Betätigung des Bremspedals 1, so ist der Fahrerwunsch in der elektronischen Steuereinheit ECU zu bewerten und es ist dahingehend zu entscheiden, ob die Fahrdynamikregelung fortzusetzen ist, oder ob die Fahrdynamikregelung abzubrechen und eine Not- bzw. Zielbremsung durchzuführen ist. Dabei ist die vom Fahrer über das Bremspedal eingeleitet Betätigungskraft F ein sicheres und zuverlässiges Mass für die Entscheidung, ob der Fahrdynamikregelung oder der Not- bzw. Zielbremsung die höhere Priorität beizumessen ist. So könnte beispielsweise bei einer kleinen Betätigungskraft F die Fahrdynamikregelung fortgesetzt werden, während bei einer grossen Betätigungskraft auf eine Not- bzw. Zielbremsung übergegangen wird.

Zu erwähnen ist auch, dass bei einer Not- bzw. Zielbremsung, wobei über den elektronisch steuerbaren Bremskraftverstärker 21 ein grösserer als sich aus der Betätigung des Bremspedals 1 ergebender Bremsdruck $p_{31}$ erzeugt wird, durch die Antiblockiereinrichtung ABS ein Blockieren der Fahrzeugräder verhindert wird, so dass die Fahrstabilität und die Lenkbarkeit des Kraftfahrzeugs aufrechterhalten bleibt.

Das in Fig. 1 betrachtete Ausführungsbeispiel setzt als Bremskraftverstärker 21 einen sogenannten "Unterdruckverstärker" ein, der elektronisch steuerbar ist. Dabei erfasst der Sensor 47 die an der beweglichen Wand 22 beaufschlagte Druckdifferenz $dp_{47}$ als mit der Verstärkung des Bremskraftverstärkers 21 in Beziehung stehende Grösse für die elektronische Steuereinheit ECU. Es besteht aber auch die Möglichkeit als Bremskraftverstärker 21 einen sogenannten "hydraulischer Verstärker" einzusetzen, dem als Energiequelle eine Hochdruckpumpe dient, die beispielsweise von einem Elektromotor angetrieben wird. In diesem Fall könnte als mit der Verstärkung des Bremskraftverstärkers 21 in Beziehung stehende Grösse beispielsweise der von der Hochdruckpumpe bereitgestellte Druck und/oder der von dem Elektromotor aufgenommene Strom für die elektronische Steuereinheit ECU erfasst werden.

**Patentansprüche**

1. Elektronisch steuerbare Bremsanlage für Kraftfahrzeuge mit

- einer Bremsdruckgebereinheit (2), die einen Hauptbremszylinder (25) aufweist, um einen Bremsdruck ($p_{31}$) zu erzeugen,
- einem Bremspedal (1), über das eine Betätigungskraft (F) in die Bremsdruckgebereinheit (2) einleitbar ist, um die Bremsdruckgebereinheit (2) zu betätigen,
- einem elektronisch steuerbaren Bremskraftverstärker (21), um entweder die zur Betätigung der Bremsdruckgebereinheit (2) über das Bremspedal (1) eingeleitete Betätigungskraft (F) zu verstärken oder eine Betätigung der Bremsdruckgebereinheit (2) zu bewirken, sowie
- ein erster Sensor (47), der eine mit der Verstärkung des elektronisch steuerbaren Bremskraftverstärkers (21) in Beziehung stehende Grösse ($dp_{47}$) für eine elektronische Steuereinheit (ECU) erfasst,

dadurch gekennzeichnet, dass

- ein zweiter Sensor den von der Bremsdruckgebereinheit (2) erzeugten Bremsdruck ($p_{31}$) für eine elektronische Steuereinheit (ECU) erfasst, und
- die elektronische Steuereinheit (ECU) die über das Bremspedal (1) eingeleitete Betätigungskraft (F) aus dem von der Bremsdruckgebereinheit (2) erzeugten Bremsdruck ($p_{31}$) und der mit der Verstärkung des elektronisch steuerbaren Bremskraftverstärkers (21) in Beziehung stehenden Grösse ($dp_{47}$) ermittelt.

2. Elektronisch steuerbare Bremsanlage nach Anspruch 1,
dadurch gekennzeichnet, dass

- der elektronisch steuerbare Bremskraftverstärker (21) mindestens eine bewegliche Wand (22) aufweist, die mit einem Differenzdruck ($dp_{47}$) beaufschlagbar ist.

3. Elektronisch steuerbare Bremsanlage nach Anspruch 2,
dadurch gekennzeichnet, dass

- die mit der Verstärkung des elektronisch steuerbaren Bremskraftverstärkers (21) in Beziehung stehende Grösse ($dp_{47}$) der an der beweglichen Wand beaufschlagte Differenzdruck ($dp_{47}$) ist.

4. Elektronisch steuerbare Bremsanlage nach Anspruch 3,
dadurch gekennzeichnet, dass

- die elektronische Steuereinheit (ECU) die über das Bremspedal (1) eingeleitete Betätigungskraft (F) unter Einbeziehung der Arbeitsfläche ($A_{28}$) des Hauptbremszylinders (25) und der Arbeitsfläche ($A_{22}$) der beweglichen Wand (22) ermittelt.

5. Elektronisch steuerbare Bremsanlage nach einem der Ansprüche 1 bis 4,
dadurch gekennzeichnet, dass

- die elektronische Steuereinheit (ECU) bei der Ermittlung der über das Bremspedal (1) eingeleiteten Betätigungskraft (F) mindestens einen Korrekturwert ($K_A$) und/oder mindestens einen Korrekturfaktor ($K_M$) einbezieht.

6. Elektronisch steuerbare Bremsanlage nach Anspruch 5,
dadurch gekennzeichnet, dass

- durch Einbeziehung des Korrekturwertes ($K_A$) durch Reib-, Massenträgheits- sowie Spannkräfte hervorgerufene Störeinflüsse kompensiert werden.

7. Elektronisch steuerbare Bremsanlage nach Anspruch 5,
dadurch gekennzeichnet, dass

- durch Einbeziehung des Korrekturfaktors ($K_M$) durch Reib-, Massenträgheits- sowie Spannkräfte hervorgerufene Störeinflüsse kompensiert werden.

8. Elektronisch steuerbare Bremsanlage nach einem der Ansprüche 1 bis 7,
dadurch gekennzeichnet, dass

- die elektronische Steuereinheit (ECU) die über das Bremspedal (1) eingeleitete Betätigungskraft (F) fortlaufend ermittelt.

9. Elektronisch steuerbare Bremsanlage nach einem der Ansprüche 1 bis 8,
dadurch gekennzeichnet, dass

- die elektronische Steuereinheit (ECU) die über das Bremspedal (1) eingeleitete Betätigungskraft (F) bewertet, um zu entscheiden, ob eine Fahrdynamikregelung fortzusetzen ist, oder ob die Fahrdynamikregelung abzubrechen und eine Not-bzw. Zielbremsung durchzuführen ist.

**Claims**

1. An electronically controllable braking system for motor vehicles comprising

- a brake pressure generator unit (2) with a master cylinder (25) for the generation of a brake pressure ($p_{31}$) ;
- a brake pedal (1) via which an actuation force (F) can be introduced into the brake pressure generator unit (2) in order to actuate the brake pressure generator unit (2);
- an electronically controllable brake booster (21) either for amplifying the actuation force (F) which is introduced via the brake pedal (1) for the actuation of the brake pressure generator unit (2), or for effecting an actuation of the brake pressure generator unit (2); as well as
- a first sensor (47) which senses a parameter ($dp_{47}$) for an electronic control unit (ECU), which is related to the amplification of the electronically controllable brake booster (21),

characterised in that

- a second sensor senses the brake pressure ($p_{31}$) generated by the brake pressure generator unit (2) for an electronic control unit (ECU, and
- the electronic control unit (ECU) determines the actuation force (F) which is introduced via the brake pedal (1) from the brake pressure ($p_{31}$) generated by the brake pressure generator unit (2) and the parameter ($dp_{47}$) which is related to the amplification of the electronically controllable brake booster (21).

2. The electronically controllable braking system according to Claim 1,
characterised in that

   - the electronically controllable brake booster (21) comprises at least one movable wall (22) which can be subjected to a differential pressure ($dp_{47}$).

3. The electronically controllable braking system according to Claim 2,
characterised in that

   - the parameter ($dp_{47}$) which is related to the amplification of the electronically controllable brake booster (21) is the differential pressure ($dP_{47}$) which acts upon the movable wall (22).

4. The electronically controllable braking system according to Claim 3,
characterised in that

   - the electronic control unit (ECU) determines the actuation force (F) which is introduced via the brake pedal (1) under consideration of the working surface ($A_{28}$) of the master cylinder (25) and the working surface ($A_{22}$) of the movable wall (22).

5. The electronically controllable braking system according to one of Claims 1 to 4,
characterised in that

   - the electronic control unit (ECU) includes at least one correction value ($K_A$) and/or at least one correction factor ($K_M$) in the determination of the actuation force (F) which is introduced via the brake pedal (1).

6. The electronically controllable braking system according to Claim 5,
characterised in that

   - interference influences arising from friction, inertia and tension forces are compensated by taking the correction value ($K_A$) into consideration.

7. The electronically controllable braking system according to Claim 5,
characterised in that

   - interference influences arising from friction, inertia and tension forces are compensated by taking the correction factor ($K_M$) into consideration.

8. The electronically controllable braking system according to one of Claims 1 to 7,
characterised in that

   - the electronic control unit (ECU) continuously determines the actuation force (F) which is introduced via the brake pedal (1).

9. The electronically controllable braking system according to one of Claims 1 to 8,
characterised in that

   - the electronic control unit (ECU) evaluates the actuation force (F) which is introduced via the brake pedal (1) in order to decide whether a driving dynamics control process is to be continued or whether the driving dynamics control process is to be aborted and an emergency braking operation or an intentional braking operation, respectively, is to be carried out.

**Revendications**

1. Système de freinage pouvant être commandé électroniquement comprenant

   - une unité d'alimentation en pression de freinage (2) qui présente un maître cylindre (25) servant à générer une pression de freinage ($p_{31}$),
   - une pédale de frein (1) par l'intermédiaire de laquelle une force d'actionnement (F) peut être introduite dans l'unité d'alimentation en pression de freinage (2) pour actionner l'unité d'alimentation en pression de freinage (2),
   - un servofrein (21) pouvant être commandé électroniquement servant soit à amplifier la force d'actionnement (F) introduite par l'intermédiaire de la pédale de frein (1) pour actionner l'unité d'alimentation en pression de freinage (2), soit à réaliser un actionnement de l'unité d'alimentation en pression de freinage (2), ainsi que
   - un premier capteur (47) qui relève une grandeur ($dp_{47}$) en relation avec l'amplification du servofrein (21) pouvant être commandé électroniquement pour une unité de commande électronique (ECU),

   caractérisé en ce que

   - un deuxième capteur relève la pression de freinage ($p_{31}$). générée par l'unité d'alimentation en pression de freinage (2) pour une unité de commande électronique (ECU), et

- l'unité de commande électronique (ECU) détermine la force d'actionnement (F) introduite par l'intermédiaire de la pédale de frein (1) à partir de la pression de freinage ($p_{31}$) générée par l'unité d'alimentation en pression de freinage (2) et à partir de la grandeur ($dp_{47}$) en relation avec l'amplification du servofrein (21) pouvant être commandé électroniquement.

2. Système de freinage pouvant être commandé électroniquement selon la revendication 1, caractérisé en ce que

 - le servofrein (21) pouvant être commandé électroniquement présente au moins une paroi mobile (22) à laquelle peut être appliquée une différence de pressions ($dp_{47}$).

3. Système de freinage pouvant être commandé électroniquement selon la revendication 2, caractérisé en ce que

 - la grandeur ($dp_{47}$) en relation avec l'amplification du servofrein (21) pouvant être commandé électroniquement est la différence des pressions ($dp_{47}$) appliquées à la paroi mobile.

4. Système de freinage pouvant être commandé électroniquement selon la revendication 3, caractérisé en ce que

 - l'unité de commande électronique (ECU) détermine la force d'actionnement (F) introduite par l'intermédiaire de la pédale de frein (1) en utilisant la surface active ($A_{28}$) du maître cylindre de frein (25) et la surface active ($A_{22}$) de la paroi mobile (22).

5. Système de freinage pouvant être commandé électroniquement selon l'une quelconque des revendication 1 à 4, caractérisé en ce que

 - l'unité de commande électronique (ECU) utilise, lors de la détermination de la force d'actionnement (F) introduite par l'intermédiaire de la pédale de frein (1) au moins une valeur de correction ($K_A$) et / ou au moins un facteur de correction ($K_M$).

6. Système de freinage pouvant être commandé électroniquement selon la revendication 5, caractérisé en ce que

 - l'utilisation de la valeur de correction ($K_A$) sert à compenser les influences perturbatrices engendrées par des forces de frottement, des forces d'inertie ainsi que des forces élastiques.

7. Système de freinage pouvant être commandé électroniquement selon la revendication 5, caractérisé en ce que

 - l'utilisation du facteur de correction ($K_M$) sert à compenser les influences perturbatrices engendrées par des forces de frottement, des forces d'inertie ainsi que des forces élastiques.

8. Système de freinage pouvant être commandé électroniquement selon l'une quelconque des revendication 1 à 7, caractérisé en ce que

 - l'unité de commande électronique (ECU) détermine en continu la force d'actionnement (F) introduite par l'intermédiaire de la pédale de frein (1).

9. Système de freinage pouvant être commandé électroniquement selon l'une quelconque des revendication 1 à 8, caractérisé en ce que

 - l'unité de commande électronique (ECU) évalue la force d'actionnement (F) introduite par l'intermédiaire de la pédale de frein (1) pour décider si une dynamique de régulation de mouvement de véhicule doit être poursuivie ou si elle doit être interrompue et si un freinage d'urgence, respectivement un freinage dirigé doit être exécuté.

**Fig. 1**